# EUROPEAN PATENT APPLICATION

(11) **EP 3 296 926 A1**
(43) Date of publication of application: **21.03.2018**
(21) Application number: 17191435.1
(22) Date of filing: 15.09.2017
(51) Int. Cl.: G06K 9/00, G06K 9/03, G06K 9/46

(54) **BIOMETRIC IMAGE PROCESSING DEVICE, BIOMETRIC IMAGE PROCESSING METHOD, AND BIOMETRIC IMAGE PROCESSING PROGRAM**

(30) Priority: 20.09.2016 JP 2016183417
(71) Applicant: FUJITSU LIMITED, Kanagawa 211-8588 (JP)
(72) Inventor: Abe, Narishige, Kanagawa, 211-8588 (JP)
(74) Representative: Hoffmann Eitle

(57) **Abstract**

A biometric image processing device includes: a fingerprint sensor configured to obtain a first fingerprint image from a finger placed on a detection surface and to obtain a second fingerprint image after the first fingerprint image is obtained; an inclination estimator configured to estimate an inclination of the finger with respect to the detection surface based on the second fingerprint image; a distortion estimator configured to estimate a distortion of a fingerprint based on the first fingerprint image and the second fingerprint image; a correction unit configured to correct the second fingerprint image based on the inclination and the distortion; and a restoration unit configured to generate, based on the corrected second fingerprint image, three-dimensional information that indicates a three-dimensional geometry of the finger.

## Description

### FIELD

The embodiments discussed herein are related to a biometric image processing device, a biometric image processing method, and a biometric image processing program.

### BACKGROUND

A fingerprint authentication, one of the biometric authentications, is used in a wide range of fields such as a control of entering and leaving a building, a room, or the like, a control of accessing a personal computer (PC), and an unlocking of a smartphone.

Many touch-based fingerprint sensors that make it possible to reduce an effect due to an operation of inputting a fingerprint have been widely used as a sensor for obtaining a fingerprint image used for authentication. However, a surface of a fingerprint sensor that is touched with a finger is flat, but a human finger pad has a three-dimensionally gently curved surface, so there occurs a distortion in a fingerprint when its three-dimensional geometry is pressed against the two-dimensional surface when the fingerprint is input.

A fingerprint authentication device is known that detects, for a predetermined time period, a sensing signal until a detection surface is pressed at a constant pressure and outputs a result of the detection as time-series motion data, so as to compare the motion data with fingerprint data (see, for example, Patent Document 1).

If a comparison is performed using a fingerprint image in which a distorted fingerprint appears, a mismatching will be more likely to occur, which results in reducing the authentication accuracy.
Patent Document 1: Japanese Laid-open Patent Publication No. 2004-171307
Patent Document 2: Japanese Laid-open Patent Publication No. 2006-215975
Patent Document 3: Japanese Laid-open Patent Publication No. 2001-101404

Non Patent Document 1: Xuanbin Si, and three others, "Detection and Rectification of Distorted Fingerprints", IEEE PAMI, 2015

### SUMMARY

It is an object in one aspect of the invention to improve the authentication accuracy in a fingerprint authentication.

According to an aspect of the invention, a biometric image processing device includes a fingerprint sensor, an inclination estimator, a distortion estimator, a correction unit, and a restoration unit.

The fingerprint sensor obtains a first fingerprint image from a finger placed on a detection surface and obtains a second fingerprint image after the first fingerprint image is obtained.

The inclination estimator estimates an inclination of the finger with respect to the detection surface based on the second fingerprint image.

The distortion estimator estimates a distortion of a fingerprint based on the first fingerprint image and the second fingerprint image.

The correction unit corrects the second fingerprint image based on the inclination and the distortion.

The restoration unit generates, based on the corrected second fingerprint image, three-dimensional information that indicates a three-dimensional geometry of the finger.

### BRIEF DESCRIPTION OF THE DRAWINGS

FIG. 1 illustrates a configuration of a biometric image processing device according to embodiments;
FIG. 2 is a flowchart of processing of inputting and restoring biometric information according to the embodiments;
FIG. 3 illustrates an example of a fingerprint image;
FIG. 4 illustrates an example of a fingerprint image in which pixel values are averaged for each block;
FIG. 5 illustrates averages of pixel values and a fitting plane;
FIG. 6 illustrates an example of inclination information when a finger is inclined with respect to a detection surface;
FIG. 7 illustrates an example of the inclination information when the finger is parallel to the detection surface;
FIG. 8 illustrates processing performed by a distortion estimator;
FIG. 9 illustrates the processing of inputting and restoring biometric information according to the embodiments;
FIG. 10 is a flowchart of registration processing according to the embodiments;
FIG. 11 is a flowchart of comparison processing according to the embodiments; and
FIG. 12 illustrates a configuration of an information processing device (a computer).

### DESCRIPTION OF EMBODIMENTS

A conventional technology that corrects a distortion of a fingerprint uses model data for estimating a distortion in a fingerprint image in advance, so it is difficult to estimate and correct a distortion in a new fingerprint image. Further, the conventional technology that corrects a distortion of a fingerprint uses a device, such as a pressure sensor, that is other than a fingerprint sensor which is used to obtain a fingerprint image, or the conventional technology causes a user to perform an additional manipulation. This results in making a manipulation for authentication itself less convenient.

Embodiments will now be described with reference to the drawings.

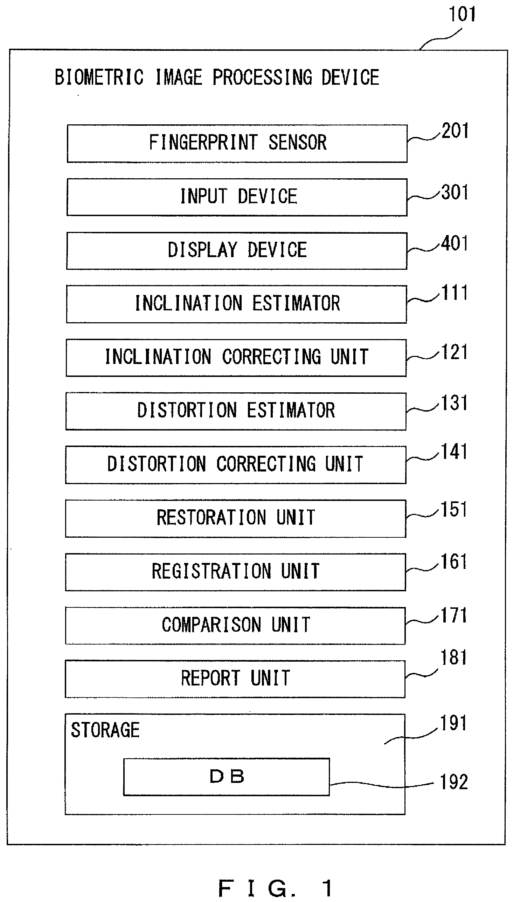

FIG. 1 illustrates a configuration of a biometric image processing device according to the embodiments.

A biometric image processing device 101 includes a fingerprint sensor 201, an input device 301, a display device 401, an inclination estimator 111, an inclination correcting unit 121, a distortion estimator 131, a distortion correcting unit 141, a restoration unit 151, a registration unit 161, a comparison unit 171, a report unit 181, and a storage 191. The biometric image processing device 101 is, for example, a server, a personal computer, a mobile phone, or a mobile terminal.

The fingerprint sensor 201 is a touch-based fingerprint sensor, and it has a flat detection surface, detects an unevenness, a fingerprint, on a surface of a finger placed on the detection surface, and generates a fingerprint image that depicts fingerprint patterns. Any detection method such as a capacitive, thermal, electric-field, ultrasonic, or optical detection method may be used as a method for detecting a fingerprint. The fingerprint sensor 201 scans a fingerprint in chronological order and generates fingerprint images. In other words, the fingerprint sensor 201 scans a fingerprint at predetermined time intervals and generates a plurality of fingerprint images I[i] (i = 0 to k).

An instruction or information from a user is input to the input device 301. Further, the input device 301 obtains data such as a user ID that is used in the biometric image processing device 101. The input device 301 is, for example, a keyboard, a touch panel, a magnetic card reader, or an integrated circuit (IC) card reader.

The display device 401 displays a result of authenticating a fingerprint, a warning that it is not possible to scan a fingerprint, or the like. The display device 401 is, for example, a liquid crystal display.

The inclination estimator 111 estimates an inclination of a finger with respect to the detection surface of the fingerprint sensor 201 when a fingerprint is input. Using the fact that, when the fingerprint sensor 201 is a touch-based fingerprint sensor, an image response appearing in a fingerprint image is stronger in an area that is pressed more strongly against the detection surface, the inclination estimator 111 analyzes a pixel value that appears in the fingerprint image, so as to estimate the inclination of the finger when the fingerprint is input. In other words, the inclination estimator 111 estimates a pressure applied to the finger when the fingerprint is input. Specifically, the fingerprint image is divided into a plurality of blocks and an average of pixel values in each block is obtained as an average pressing force in the block. The average pressing force calculated in each block is fitted with (approximated by) a plane, and inclination information p[i] that indicates the plane is obtained as the inclination of the finger when the fingerprint is input. The inclination estimator 111 normalizes the inclination information p[i] according to a pressing force such that the inclination information p[i] has a larger value if the pressing force is stronger and has a smaller value if the pressing force is weaker. The normalized inclination information p[i] is referred to as inclination information P[i].

The inclination correcting unit 121 corrects an inclination in the fingerprint image I[i] based on the inclination information P[i].

The distortion estimator 131 estimates a distortion of a fingerprint in the fingerprint image I[i] due to an operation of inputting the fingerprint.

The restoration unit 151 generates three-dimensional information that indicates a three-dimensional geometry of the finger (specifically, a finger pad) from the corrected fingerprint image.

The registration unit 161 associates a feature amount that indicates a feature of a fingerprint with a user ID and records them in a database (DB) 192. The feature amount includes a plurality of pieces of position information that each indicate a position of a feature point of a fingerprint (a central point, a bifurcation point, an end point, or a delta), and each of the pieces of position information includes three elements (x, y, z) . In other words, the position of a feature point is represented not only by a position x in an x (horizontal) direction and a position y in a y (vertical) direction, but also by z representing a z (depth) direction.

The comparison unit 171 compares the feature amount recorded in the DB 192 with a feature amount of a fingerprint input from the fingerprint sensor 201, and determines whether they match each other. The comparison unit 171 determines whether they match each other, for example, using minutiae matching.

The report unit 181 displays, on the display device 401, a result of authenticating a fingerprint, a warning that it is not possible to scan a fingerprint, or the like.

The storage 191 stores the DB 192 that includes a feature amount that indicates a feature of a fingerprint. The feature amount that indicates a feature of a fingerprint is associated with a user ID are associated with each other and recorded in the DB 192. The DB 192 includes a plurality of feature amounts and a plurality of user IDs. The feature amount recorded in the DB 192 may be referred to as a template.

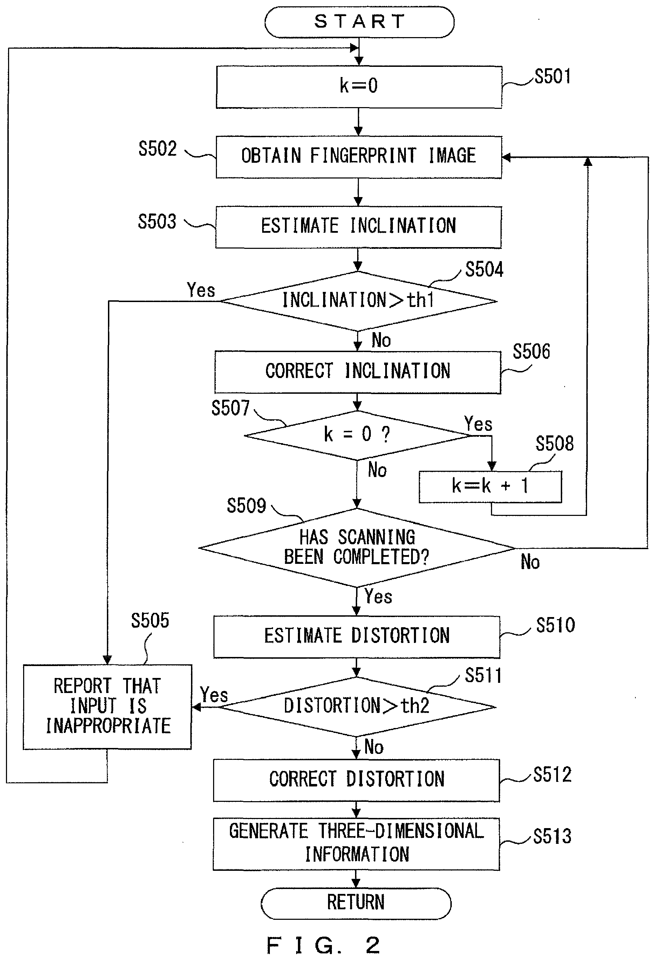

FIG. 2 is a flowchart of processing of inputting and restoring biometric information according to the embodiments.

First, a user brings his/her finger into contact with the detection surface of the fingerprint sensor 201.

In Step S501, the fingerprint sensor 201 sets a variable k to zero.

In Step S502, the fingerprint sensor 201 obtains a fingerprint image I[k] . Specifically, the fingerprint sensor 201 detects a fingerprint of the finger placed on the detection surface and generates a fingerprint image I[k] that depicts fingerprint patterns.

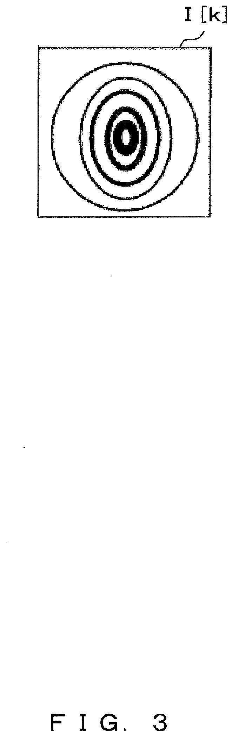

FIG. 3 illustrates an example of a fingerprint image.

In the fingerprint image I[k], a portion of the valleys of a fingerprint is displayed in white and a portion of the ridges of the fingerprint is displayed in black. For example, when each pixel value in the fingerprint image I[k] is expressed as one byte, a pixel value of a pixel in a valley area is close to 255, and a pixel value of a pixel in a ridge area is close to 0.

For example, if a finger is inclined with respect to the detection surface of the fingerprint sensor 201, a high pressure will be applied to the fingertip and a low pressure will be applied around the first finger joint. In this case, the black representing the ridge is even deeper in an area of the fingerprint image I[k] that corresponds to a portion around the fingertip, and the black representing the ridge is lighter (that is, gray) in an area corresponding to a portion around the first finger joint than in the area corresponding to the portion around the fingertip.

Return to FIG. 2.

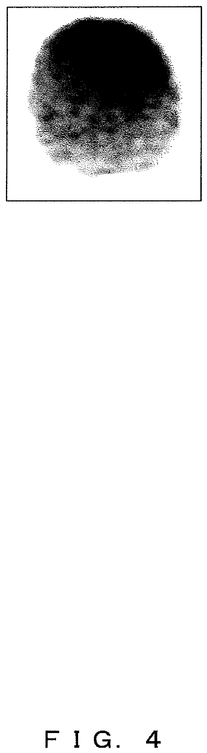

In Step S503, the inclination estimator 111 estimates an inclination of the finger when the fingerprint is input. Specifically, the inclination estimator 111 divides the fingerprint image I[k] into a plurality of blocks for each predetermined size. The inclination estimator 111 calculates an average of pixel values of pixels in a block for each block, and uses the average as a pixel value of a pixel in the block. An image illustrated in FIG. 4 is obtained when the calculated average is represented as a pixel value of a pixel in a block.

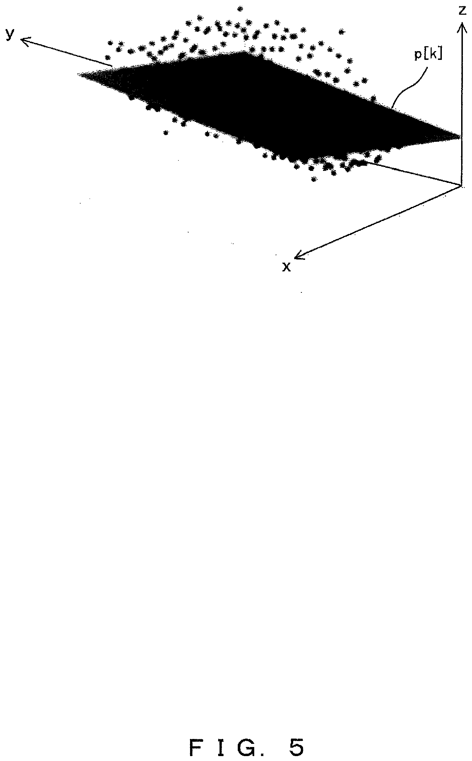

As illustrated in FIG. 5, an average of pixel values of pixels in each block is plotted in a three-dimensional space represented by the x direction, the y direction, and the z direction, in which a center coordinate of the block is (x,y) and an average of pixel values of pixels in the block is z. Each point illustrated in FIG. 5 represents the average of pixel values of pixels in each block.

The inclination estimator 111 fits the average of pixel values of pixels in each block with (approximates the average by) a plane. In other words, the inclination estimator 111 calculates a plane whose distance from the average of pixel values of pixels in each block is smallest, and generates information (inclination information) p[k] that indicates the calculated plane. The inclination information p[k] includes a value in the calculated plane that corresponds to a coordinate value x in the x direction and a coordinate value y in the y direction. The value in the calculated plane that is included in the inclination information p [k] and that corresponds to the coordinate value x in the x direction and the coordinate value y in the y direction may be referred to as a value of the inclination information p [k] . The inclination information p [k] includes values in the calculated plane that each correspond to a respective one of a plurality of coordinates in an area that is formed by the x direction and the y direction and is equal in size to the fingerprint image I[k] . For example, when the fingerprint image I[k] is an image having m pixels in a horizontal direction and n pixels in a vertical direction, the coordinate value x in the x direction is 1 to m, and the coordinate value y in the y direction is 1 to n. Here, the inclination information p [k] includes values in the plane that each correspond to a respective one of the combinations of the coordinate value x (= 1 to m) and the coordinate value y (= 1 to n) .

The inclination estimator 111 normalizes the inclination information p[k]. Specifically, when the value of the inclination information p [k] is included between 0 and 255, the inclination estimator 111 subtracts the value of the inclination information p[k] from 225 so as to generate inclination information P[k]. For example, when a value corresponding to a certain coordinate (x,y) is 225 in the inclination information p[k], a value corresponding to the certain coordinate (x,y) is 0 in the inclination information P[k]. As described above, due to normalization, a value that is large in the inclination information p[k] corresponds to a small value in the inclination information P[k]. On the other hand, due to normalization, a value that is small in the inclination information p[k] corresponds to a large value in the inclination information P[k].

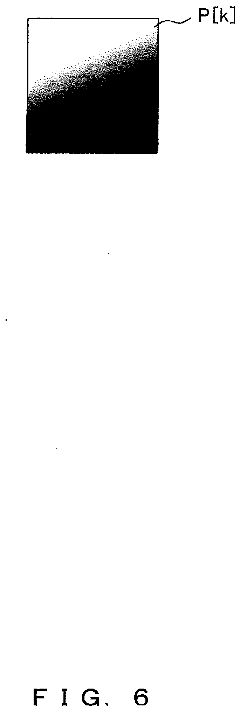

For example, as illustrated in FIG. 6, when the finger is inclined with respect to the detection surface of the fingerprint sensor 201, the inclination information P[k] is represented as a grayscale image using a value of the inclination information P[k] as a pixel value. In the inclination information P[k] illustrated in FIG. 6, the upper portion is white (that is, a pixel value is large), and the color is gradually changed to black which is deeper (that is, the pixel value is smaller) toward the lower portion.

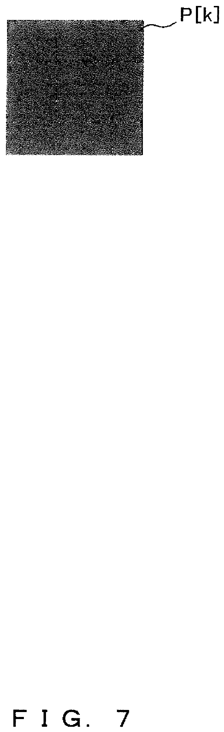

For example, as illustrated in FIG. 7, when the finger is parallel to the detection surface of the fingerprint sensor 201, the inclination information P [k] is represented as a grayscale image using a value of the inclination information P[k] as a pixel value. In the inclination information P[k] illustrated in FIG. 7, all of the pixel values are almost equal to one another.

In Step S504, the inclination estimator 111 determines whether the inclination is greater than a threshold th1. The control process moves onto Step S505 when the inclination is greater than the threshold th1, and the control process moves onto Step S506 when the inclination is not greater than the threshold th1. Here, it is assumed that the inclination is a distribution of a value of the inclination information P[k].

In Step S505, the report unit 181 reports that the input is inappropriate. For example, the report unit 181 displays, on the display device 401, information indicating that the input is inappropriate.

In Step S506, the inclination correcting unit 121 corrects an inclination in the fingerprint image I[k] so as to generate a fingerprint image I'[k] in which the inclination has been corrected. Specifically, the inclination correcting unit 121 calculates the fingerprint image I' [k] in which the inclination has been corrected, using I' [k] =I [k] +ηP [k] . η is an appropriate positive coefficient. In other words, a pixel value of each pixel in the fingerprint image I' [k] in which the inclination has been corrected is calculated by adding, to a pixel value of each pixel in the fingerprint image I[k], a value obtained by multiplying a value corresponding to each coordinate of the inclination information P[k] by the coefficient η.

As described above, for example, if a finger is inclined with respect to the detection surface of the fingerprint sensor 201, a high pressure will be applied to the fingertip and a low pressure will be applied around the first finger joint. In this case, the black representing the ridge is even deeper in an area of the fingerprint image I[k] that corresponds to a portion around the fingertip, and the black representing the ridge is lighter (that is, gray) in an area corresponding to a portion around the first finger joint than in the area corresponding to the portion around the fingertip.

For example, when a high pressure is applied to the fingertip and a low pressure is applied around the first finger joint and when the upper portion in the fingerprint image I[k] of FIG. 3 is an area that corresponds to the portion around the fingertip and its lower portion is an area that corresponds to the portion around the first finger joint, the black representing the ridge is even deeper (that is, the pixel value is smaller) in the upper portion of the fingerprint image I[k]. Further, the black representing the ridge is lighter (that is, gray) in the lower portion of the fingerprint image I[k] than in the area corresponding to the portion around the fingertip.

With respect to the fingerprint image I [k] described above, in the process of Step S503, the average of pixel values of pixels in each block of the fingerprint image I[k] is fitted with a plane, and inclination information p[k] that indicates the calculated plane is generated. The generated inclination information p[k] is normalized as described above so as to generate inclination information P [k] . As illustrated in FIG. 6, the inclination information P[k] is represented as a grayscale image using a value of the inclination information P[k] as a pixel value, wherein the upper portion is white (that is, a pixel value is large), and the color is gradually changed to black, which is deeper (that is, the pixel value is smaller) toward the lower portion.

In the process of Step S506, when the fingerprint I[k] is added to the inclination information P[k], a large value is added to the pixel value of each pixel in the upper portion of the fingerprint image I[k], and a value smaller than the value added in the upper portion is added to the pixel value of each pixel in the lower portion. Accordingly, the pixel values of a pixel representing the ridge are close to each other in the upper portion and the lower portion in the corrected fingerprint image I' [k]. Thus, the corrected fingerprint image I' [k] is an image that is similar to the fingerprint image I[k] when the finger is not inclined with respect to the detection surface.

In Step S507, the inclination correcting unit 121 determines whether k is zero. The control process moves onto Step S508 when k is zero, and the control process moves onto Step S509 when k is not zero.

In Step S508, the fingerprint sensor 201 adds one to the variable k.

In Step S509, the inclination correcting unit 121 determines whether a scanning of the fingerprint is completed. For example, when an area of the fingerprint is greater than a predetermined size in the fingerprint image I[k], the inclination correcting unit 121 determines that the scanning of the fingerprint has been completed. When the area of the fingerprint is not greater than the predetermined size in the fingerprint image I[k], the inclination correcting unit 121 determines that the scanning of the fingerprint has not been completed. The control process moves onto Step S510 when the scanning of the fingerprint has been completed, and the control process returns to Step S502 when the scanning of the fingerprint has not been completed.

In Step S510, the distortion estimator 131 estimates a distortion of the fingerprint in the fingerprint image I[k] due to an operation performed when the fingerprint is input. Specifically, the distortion estimator 131 estimates the distortion using the fingerprint image I[k] and a fingerprint image I[k-1].

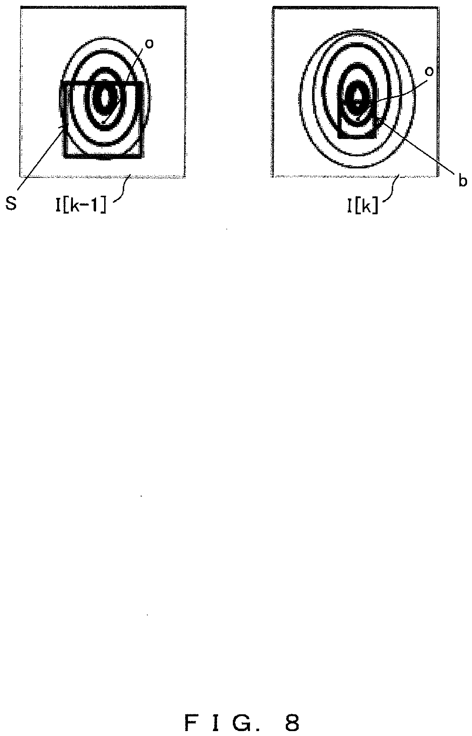

FIG. 8 illustrates processing performed by the distortion estimator.

The distortion estimator 131 divides the fingerprint image I[k] into a plurality of blocks for each predetermined size (for example, s pixels in the vertical direction and s pixels in the horizontal direction).

For example, the case in which an amount of position shifting of a block b from among the plurality of blocks of the fingerprint image I[k] is calculated is described in FIG. 8, wherein a center coordinate of the block b is o (xo, yo). The distortion estimator 131 sets, to be a search area S, an area of the fingerprint image I [k-1] that has αs pixels in the vertical direction and αs pixels in the horizontal direction and whose center is the coordinate o (xo,yo), in which, for example, α is a real number that is greater than one.

The distortion estimator 131 performs an image matching of the block b and the search area S and calculates an area (hereinafter referred to as a matching area) in the search area S that is closest to matching the block b (that is, an area in the search area S that is most similar to the block b). The distortion estimator 131 calculates an amount of position shifting between the center coordinate o (xo,yo) (that is, the center coordinate o (xo,yo) of the block b) and a center coordinate m (xm,ym) of the matching area. The amount of position shifting includes a direction from the center coordinate o (xo,yo) to the center coordinate m (xm,ym) and a distance between the center coordinate o (xo,yo) and the center coordinate m (xm,ym).

For example, normalized cross correlation or phase only correlation can be used as a matching method.

The distortion estimator 131 eliminates noise by applying thin plate spline (TPS) to the calculated amount of position shifting, so as to generate a TPS model that indicates a distortion.

In Step S511, the distortion estimator 131 determines whether the distortion is greater than a threshold th2. The control process moves onto Step S505 when the distortion is greater than the threshold th2, and the control process moves onto Step S512 when the distortion is not greater than the threshold th2. Here, it is assumed that the distortion is an average of an absolute value of the amount of position shifting of each block calculated in Step S510.

In Step S512, the distortion correcting unit 141 corrects, using the TPS model generated in Step S510, a distortion in the fingerprint image I'[k] in which the inclination has been corrected, so as to generate a fingerprint image I" [k] in which the inclination and the distortion have been corrected.

In Step S513, a restoration unit 151 generates three-dimensional information that indicate a three-dimensional geometry of the finger from the fingerprint image I"[k] in which the inclination and the distortion have been corrected. Specifically, the restoration unit 151 generates the three-dimensional information using, as depth information, a pixel value of a pixel in the fingerprint image I"[k] in which the inclination and the distortion have been corrected.

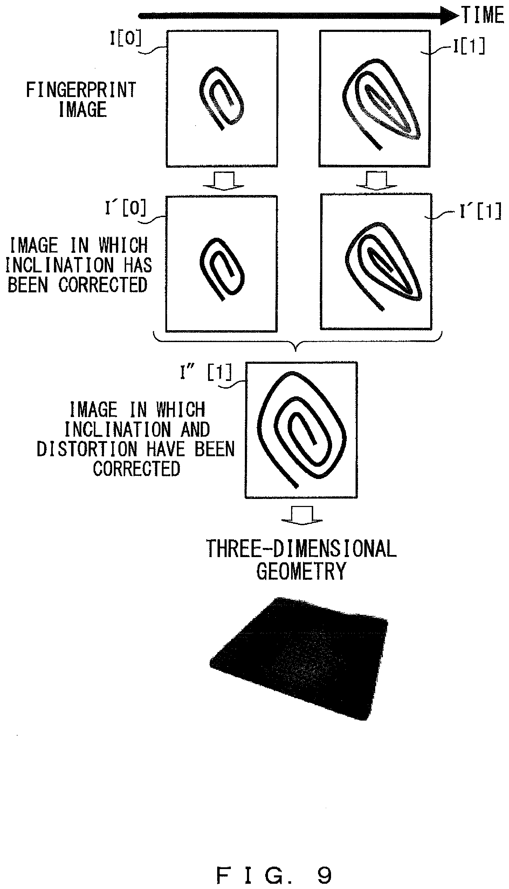

FIG. 9 illustrates the processing of inputting and restoring biometric information according to the embodiments.

The fingerprint sensor 201 obtains a fingerprint image I, and the inclination correcting unit 121 generates a fingerprint image I' in which an inclination in the fingerprint image I has been corrected.

The fingerprint sensor 201 obtains a fingerprint image I after it obtains the fingerprint image I, and the inclination correcting unit 121 generates a fingerprint image I' in which an inclination in the fingerprint image I has been corrected.

The distortion estimator 131 estimates a distortion from the fingerprint image I and the fingerprint image I, and the distortion correcting unit 141 corrects the fingerprint image I' in which the inclination has been corrected, so as to generate a fingerprint image I" in which the inclination and the distortion have been corrected.

The restoration unit 151 generates three-dimensional information that indicates a three-dimensional geometry of the finger from the fingerprint image I" in which the inclination and the distortion have been corrected.

In the above description, the three-dimensional information that indicates a three-dimensional geometry of a finger is generated from the fingerprint images I and I, but the method for generating the three-dimensional information is not limited to this, and, for example, the fingerprint sensor 201 may further obtain fingerprint images I, I, ..., and I[j], and the three-dimensional information that indicates a three-dimensional geometry of a finger may be generated from the fingerprint image I obtained at the beginning and the fingerprint image I[j] obtained at the end.

In other words, the three-dimensional information that indicates a three-dimensional geometry of a finger may be generated by estimating an inclination and a distortion by use of two out of a plurality of obtained fingerprint images, and by correcting an inclination and a distortion in one of the two fingerprint images which is obtained posterior to the other.

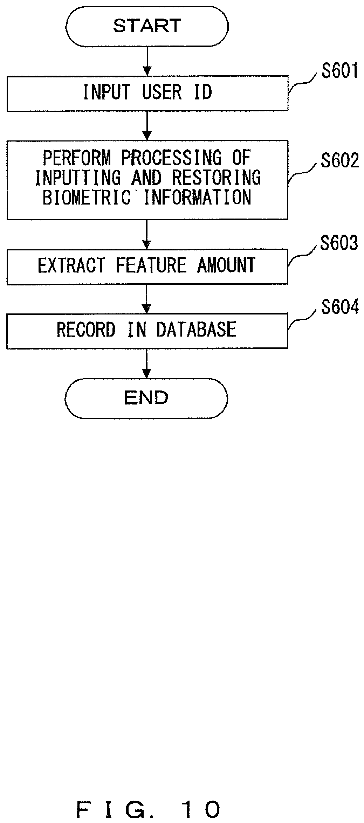

FIG. 10 is a flowchart of registration processing according to the embodiments.

In Step S601, the input device 301 obtains a user ID input by the user. For example, when the input device 301 is a keyboard or a touch panel, the input device 301 obtains a user ID input by the user using a keyboard or a touch panel. Further, when the input device 301 is a magnetic card reader or an IC card reader, the input device 301 reads a magnetic card or an IC card so as to obtain the user ID included in the magnetic card or the IC card.

In Step S602, the biometric image processing device 101 performs the processing of inputting and restoring biometric information. The processing of inputting and restoring biometric information has been described in detail in FIG. 2. Three-dimensional information that indicates a three-dimensional geometry of the finger is generated by performing the processing of inputting and restoring biometric information.

In Step S603, the registration unit 161 detects a feature amount from the three-dimensional information that indicates a three-dimensional geometry of the finger. The feature amount includes a plurality of pieces of position information that each indicate a position of a feature point of a fingerprint (a central point, a bifurcation point, an end point, or a delta), and each of the pieces of position information includes three elements (x,y,z). In other words, the position of a feature point is represented not only by a position x in the x (horizontal) direction and a position y in the y (vertical) direction, but also by z representing a position in the z (depth) direction.

In Step S604, the registration unit 161 associates the user ID with the feature amount and records them in the DB 192.

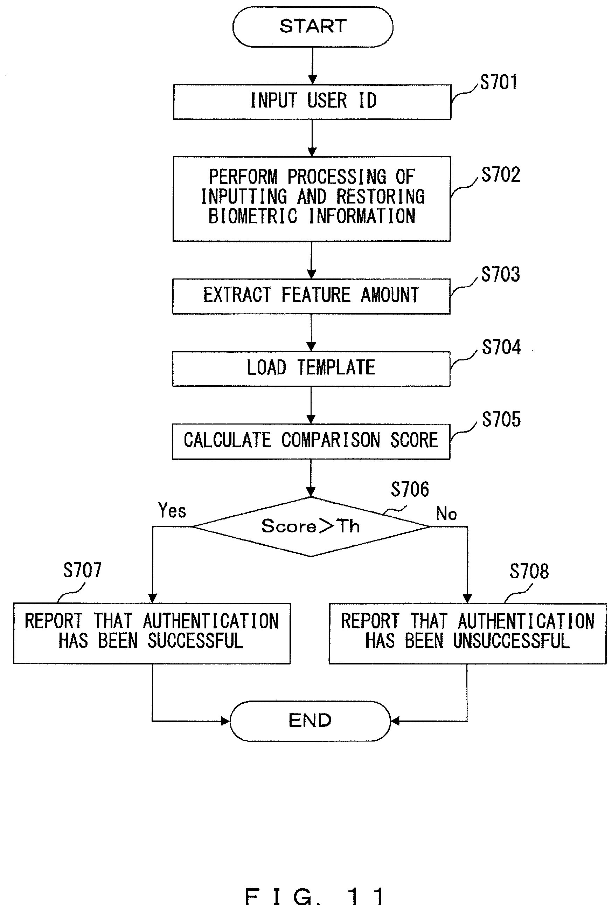

FIG. 11 is a flowchart of comparison processing according to the embodiments.

In Step S701, the input device 301 obtains a user ID input by the user. For example, when the input device 301 is a keyboard or a touch panel, the input device 301 obtains a user ID input by the user using a keyboard or a touch panel. Further, when the input device 301 is a magnetic card reader or an IC card reader, the input device 301 reads a magnetic card or an IC card so as to obtain the user ID included in the magnetic card or the IC card.

In Step S702, the biometric image processing device 101 performs the processing of inputting and restoring biometric information. The processing of inputting and restoring biometric information has been described in detail in FIG. 2.

In Step S703, the comparison unit 171 detects a feature amount from the three-dimensional information that indicates a three-dimensional geometry of the finger. The feature amount includes a plurality of pieces of position information that each indicate a position of a feature point of a fingerprint (a central point, a bifurcation point, an end point, or a delta), and each of the pieces of position information includes three elements (x,y,z). In other words, the position of a feature point is represented not only by a position x in the x (horizontal) direction and a position y in the y (vertical) direction, but also by z representing a position in the z (depth) direction.

In Step S704, the comparison unit 171 reads, from the DB 192, a feature amount that is associated with the user ID obtained in Step S701.

In Step S705, using the feature amount detected in Step S703 and the feature amount read from the DB 192 in Step S704, the comparison unit 171 calculates a comparison score that represents the similarity of the two feature amounts. The comparison score is larger if the two feature amounts are more similar to each other.

In Step S706, the comparison unit 171 determines whether the comparison score is greater than a threshold Th. The control process moves onto Step S707 when the comparison score is greater than the threshold Th, and the control process moves onto Step S708 when the comparison score is not greater than the threshold Th.

In Step S707, the report unit 181 reports that an authentication has been successful. For example, the report unit 181 displays the success of authentication on the display device 401. Then, the biometric image processing device 101 performs processing that corresponds to the success of authentication (such as an unlocking of a door or an unlocking of a smartphone).

In Step S708, the report unit 181 reports that an authentication has been unsuccessful. For example, the report unit 181 displays, on the display device 401, the failure of authentication and a request that the user input a fingerprint again.

In the biometric image processing device according to the embodiments, a fingerprint image is corrected and a three-dimensional geometry of a finger is generated so as to perform a fingerprint authentication, which results in being able to improve the authentication accuracy in a fingerprint authentication.

In the biometric image processing device according to the embodiments, there is no need to use model data for estimating a distortion in a fingerprint image in advance, which results in being able to estimate and correct a distortion in a new fingerprint image.

In the biometric image processing device according to the embodiments, there is no need to further include a device that is other than a fingerprint sensor and is used to obtain information used to estimate an inclination and a distortion, because the inclination and the distortion are estimated from a fingerprint image obtained by the fingerprint sensor, which results in being able to make a biometric image processing device smaller.

In the biometric image processing device according to the embodiments, there is no need to make a request for a user to perform an additional manipulation in order to obtain information used to estimate an inclination and a distortion, which results in avoiding making a manipulation for authentication less convenient.

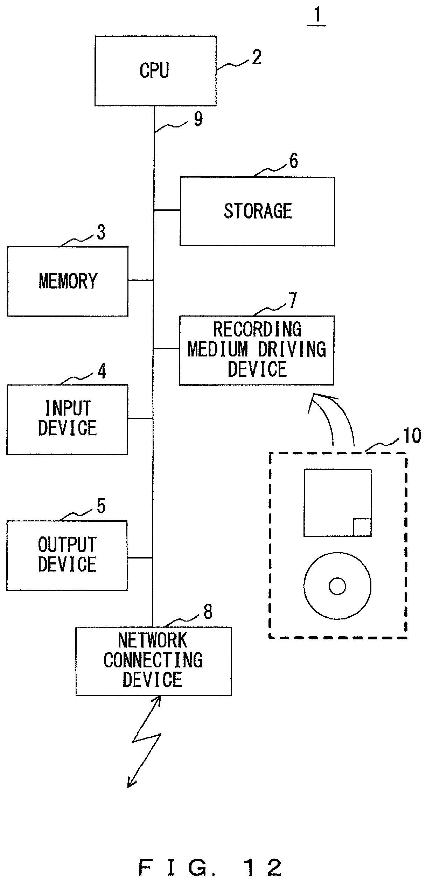

FIG. 12 illustrates a configuration of an information processing device (a computer).

The biometric image processing device 101 according to the embodiments can be realized by, for example, an information processing device (a computer) 1 as illustrated in FIG. 12.

The information processing device 1 includes a CPU 2, a memory 3, an input device 4, an output device 5, a storage 6, a recording medium driving device 7, and a network connecting device 8, and these components are connected to one another via a bus 9.

The CPU 2 is a central processing unit that controls the entirety of the information processing device 1. The CPU 2 operates as the inclination estimator 111, the inclination correcting unit 121, the distortion estimator 131, the distortion correcting unit 141, the restoration unit 151, the registration unit 161, the comparison unit 171, and the report unit 181.

The memory 3 is a memory, such as a read only memory (ROM) or a random access memory (RAM), that temporarily stores, upon executing a program, the program or data that is stored in the storage 6 (or a portable recording medium 10) . The CPU 2 executes the program using the memory 3, so as to perform the variety of processing described above.

In this case, a program code itself that is read from, for example, the portable recording medium 10 realizes the functions of the embodiments.

The input device 4 is used, for example, for inputting instructions or information from a user or an operator, or obtaining data used in the information processing device 1. The input device 4 is, for example, a keyboard, a mouse, a touch panel, a camera, a magnetic card reader, an IC card reader, or a fingerprint sensor. The input device 4 corresponds to the fingerprint sensor 201 or the input device 301.

The output device 5 is a device that outputs inquiries to the user or the operator or outputs a result of processing, and that operates by a control performed by the CPU 2. The output device 5 is, for example, a display or a printer. The output device 5 corresponds to the display device 401.

The storage 6 is, for example, a magnetic disk device, an optical disk device, or a tape device. The information processing device 1 stores the above-described program and data in the storage 6 so as to load them into the memory 3 and use them as needed. The memory 3 and the storage 6 correspond to the storage 191.

The recording medium driving device 7 drives the portable recording medium 10 so as to access the recorded content. Any computer-readable recording medium such as a memory card, a flexible disk, a compact disk read only memory (CD-ROM), an optical disk, or a magneto-optical disk may be used as a portable recording medium. The user stores the above-described program and data in the portable recording medium 10 so as to load them into the memory 3 and use them as needed.

The network connecting device 8 is a communication interface that is connected to any communication network such as a local area network (LAN) or a wide area network (WAN) and makes a data conversion associated with communication. The network connecting device 8 transmits/receives data to/from a device that is connected to the network connecting device 8 through the communication network.

## Claims

1. A biometric image processing device comprising:
a fingerprint sensor configured to obtain a first fingerprint image from a finger placed on a detection surface and to obtain a second fingerprint image after the first fingerprint image is obtained;
an inclination estimator configured to estimate an inclination of the finger with respect to the detection surface based on the second fingerprint image;
a distortion estimator configured to estimate a distortion of a fingerprint based on the first fingerprint image and the second fingerprint image;
a correction unit configured to correct the second fingerprint image based on the inclination and the distortion; and
a restoration unit configured to generate, based on the corrected second fingerprint image, three-dimensional information that indicates a three-dimensional geometry of the finger.

2. The biometric image processing device according to claim 1, wherein the inclination estimator divides the second fingerprint image into a plurality of areas, calculates an average of pixel values of pixels in each of the plurality of areas, and calculates, based on the average, inclination information that indicates the inclination.

3. The biometric image processing device according to claim 1 or 2, wherein the distortion estimator divides the second fingerprint image into a plurality of areas, and calculates a difference between a position of a first area from among the plurality of areas and a position of a second area in the second fingerprint image, the second area is most similar to the first area.

4. A biometric image processing method performed by a biometric image processing device, the biometric image processing method comprising:
obtaining a first fingerprint image from a finger placed on a detection surface;
obtaining a second fingerprint image after the first fingerprint image is obtained;
estimating an inclination of the finger with respect to the detection surface based on the second fingerprint image;
estimating a distortion of a fingerprint based on the first fingerprint image and the second fingerprint image;
correcting the second fingerprint image based on the inclination and the distortion; and
generating, based on the corrected second fingerprint image, three-dimensional information that indicates a three-dimensional geometry of the finger.

5. The biometric image processing method according to claim 4, wherein the estimating the inclination divides the second fingerprint image into a plurality of areas, calculates an average of pixel values of pixels in each of the plurality of areas, and calculates, based on the average, inclination information that indicates the inclination.

6. The biometric image processing method according to claim 4 or 5, wherein the estimating the distortion divides the second fingerprint image into a plurality of areas, and calculates a difference between a position of a first area from among the plurality of areas and a position of a second area in the second fingerprint image, the second area is most similar to the first area.

7. A biometric image processing program that causes a computer to execute a process, the process comprising:
obtaining a first fingerprint image from a finger placed on a detection surface;
obtaining a second fingerprint image after the first fingerprint image is obtained;
estimating an inclination of the finger with respect to the detection surface based on the second fingerprint image;
estimating a distortion of a fingerprint based on the first fingerprint image and the second fingerprint image;
correcting the second fingerprint image based on the inclination and the distortion; and
generating, based on the corrected second fingerprint image, three-dimensional information that indicates a three-dimensional geometry of the finger.

8. The biometric image processing program according to claim 7, wherein the estimating the inclination divides the second fingerprint image into a plurality of areas, calculates an average of pixel values of pixels in each of the plurality of areas, and calculates, based on the average, inclination information that indicates the inclination.

9. The biometric image processing program according to claim 7 or 8, wherein the estimating the distortion divides the second fingerprint image into a plurality of areas, and calculates a difference between a position of a first area from among the plurality of areas and a position of a second area in the second fingerprint image, the second area is most similar to the first area.
